(19) Europäisches Patentamt

European Patent Office

Office européen des brevets

(11) **EP 1 262 906 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
**G01S 7/491** (2006.01) **G01S 17/32** (2006.01)
**G06K 7/10** (2006.01)

(21) Anmeldenummer: **02011870.9**

(22) Anmeldetag: **28.05.2002**

(54) **Verfahren und Vorrichtung zur Abstandsbestimmung**

Method and device for measuring distance

Procédé et dispositif de mesure de distance

(84) Benannte Vertragsstaaten:
**AT BE CH CY DE DK ES FI FR GB GR IE IT LI LU MC NL PT SE TR**

(30) Priorität: **29.05.2001 DE 10126087**

(43) Veröffentlichungstag der Anmeldung:
**04.12.2002 Patentblatt 2002/49**

(73) Patentinhaber: **SICK AG**
**79183 Waldkirch,**
**Breisgau (DE)**

(72) Erfinder:
• **Pierenkemper, Hans-Werner**
**79312 Emmendingen (DE)**
• **Pastor, Sebastian**
**79108 Freiburg (DE)**

(74) Vertreter: **Manitz, Finsterwald & Partner GbR**
**Postfach 31 02 20**
**80102 München (DE)**

(56) Entgegenhaltungen:
**EP-A- 0 434 191 EP-A- 0 747 727**
**US-A- 5 309 212**

**Beschreibung**

Die Erfindung betrifft ein Verfahren und eine Vorrichtung zur Bestimmung des Abstands zu einem Objekt.

Hierbei findet das Meßprinzip der Anregung und Auswertung einer Resonanzschwingung Anwendung: ein Sender sendet entlang einer Meßstrecke ein moduliertes Signal, insbesondere ein moduliertes Lichtsignal in Richtung des Objekts aus. Das vom Objekt entlang der Meßstrecke oder entlang eines Teils hiervon reflektierte Signal wird von einem Empfänger detektiert und - direkt oder über weitere Bauelemente - einem Filterbaustein mit definierter Phasenkennlinie zugeführt. Das Ausgangssignal des Filterbausteins wird wiederum - direkt oder indirekt - dem Sender zugeführt.

Auf diese Weise wird durch den Sender, die Meßstrecke, den Empfänger und den Filterbaustein, sowie ggf. durch weitere Bauelemente, ein Schwingkreis gebildet. In diesen Schwingkreis ist der Sender derart integriert, daß seine Modulationsfrequenz der von der Signallaufzeit über die Meßstrecke abhängigen Resonanzfrequenz des Schwingkreises entspricht. Somit kann durch Messung der Resonanzfrequenz des Schwingkreises der gesuchte Abstand zu dem Objekt berechnet werden. Voraussetzung für das Funktionieren dieses Meßprinzips ist der Einsatz eines Filterbausteins, dessen Phasengang für den gewünschten Meßbereich das Eintreten einer Resonanzbedingung, also die Erzeugung einer Phasenverschiebung von insgesamt $2\pi$ bzw. 360° oder einem ganzzahligen Vielfachen hiervon gewährleistet.

Aus der EP 0 747 727 A2 sind ein Verfahren und eine Vorrichtung zur Erfassung des Abstands zwischen einer Messeinrichtung und einem Objekt bekannt, wobei ein über eine Messstrecke gesandtes Lichtsignal eine Phasenverschiebung erfährt, welche in einem Schwingkreis in eine Frequenzänderung umgesetzt wird.

Der Erfindung liegt die Aufgabe zugrunde, für das eingangs erläuterte Meßprinzip die Genauigkeit der Abstandsbestimmung zu erhöhen.

Diese Aufgabe wird für ein Verfahren und eine Vorrichtung durch die Merkmale des Anspruchs 1 bzw. des Anspruchs 8 gelöst.

Wesentlich für diesen Lösungsansatz ist also, daß mehrere Phasenkennlinien, die sich hinsichtlich Phase und Betrag unterscheiden, zur Bildung des Schwingkreises und Ermittlung der entsprechenden Resonanzfrequenz herangezogen werden. Durch diese Berücksichtigung wenigstens einer weiteren Phasenkennlinie steht ein Vergleichswert zur Verfügung, der auf die nachfolgend erläuterte Weise zur Überprüfung des ermittelten Abstands und/oder zur Erhöhung der Meßgenauigkeit herangezogen werden kann.

Die für die verschiedenen Phasenkennlinien ermittelten Resonanzfrequenzen werden vorzugsweise für die Bestimmung des gesuchten Abstands berücksichtigt. Hierfür werden die verschiedenen Resonanzfrequenzen - oder die diesen Resonanzfrequenzen jeweils entsprechenden Abstände - in Beziehung zueinander gesetzt. Wichtig ist in jedem Fall, daß die Ergebnisse mehrerer Messungen der Resonanzfrequenz für verschiedene Phasenkennlinien nicht unabhängig voneinander weiterverarbeitet werden, sondern zur Auswertung miteinander kombiniert werden.

Die Auswertung der gemessenen Resonanzfrequenzen ist also nicht auf den Zweck einer ausschließlichen und unmittelbaren Abstandsbestimmung beschränkt. Insbesondere können die für die verschiedenen Phasenkennlinien ermittelten Resonanzfrequenzen zusätzlich für eine Eindeutigkeitsprüfung herangezogen werden, also für eine Überprüfung, welche der möglichen Resonanzbedingungen vorliegt. Die auszuwertende Phaseninformation wiederholt sich nämlich für verschiedene Tastabstände mit einer bestimmten Periodizität. Dies kann bei dem bekannten Meßprinzip unter ungünstigen Bedingungen zu einer Fehlbestimmung des gesuchten Abstands führen, nämlich wenn der Auswertung der gemessenen Resonanzfrequenz nicht die zutreffende Resonanzbedingung zugrunde gelegt wird.

Demgegenüber kann bei der Erfindung aufgrund der Berücksichtigung unterschiedlicher Phasenkennlinien geprüft werden, welches ganzzahlige Vielfache von $2\pi$ bzw. 360° vorliegt. Dadurch wird eine Erweiterung des Eindeutigkeitsbereichs erreicht.

Eine mögliche Vorgehensweise für diese Eindeutigkeitsprüfung besteht darin, daß die für die verschiedenen Phasenkennlinien ermittelten Resonanzfrequenzen miteinander oder mit wenigstens einem Referenzwert verglichen werden, oder daß mehrere, verschiedenen Phasenkennlinien und insbesondere auch unterschiedlichen Resonanzbedingungen entsprechende Abstände bestimmt und miteinander verglichen werden. Für eine derartige vergleichende Auswertung ist es von Vorteil, wenn der zugrundeliegende Abstand des Objekts unverändert ist oder eine eventuelle zwischenzeitliche Abstandsänderung bekannt ist und mit berücksichtigt wird.

Alternativ oder zusätzlich zu dieser Eindeutigkeitsprüfung kann die Meßgenauigkeit erhöht werden, indem die verschiedenen Phasenkennlinien bzw. die hieraus ermittelten Resonanzfrequenzen zur Bestimmung der parasitären Phasenverschiebung herangezogen werden, also derjenigen Phasenverschiebung, die durch andere Bauelemente als durch den erläuterten Filterbaustein verursacht wird.

Wie bereits erläutert, kann der Schwingkreis weitere Bauelemente enthalten, beispielsweise einen Verstärker, einen Bandpaß oder eine Phasenkorrekturschaltung. Diese Bauelemente können beispielsweise durch Temperatur- oder Alterungseffekte ihren Beitrag zur Phasenverschiebung entlang des Schwingkreises auf eine Weise ändern, die durch einmalige Referenzmessungen nicht mit hinreichender Genauigkeit vorhersagbar ist. Soweit hierdurch nicht mehr nachvollziehbar ist, welcher Anteil der gemessenen Phasenverschiebung durch den Signalverlauf entlang der eigentlichen Meßstrecke bedingt ist, ergeben sich Ungenauigkeiten bei der Abstandsbestimmung.

Um derartige Fehler und weitere systematische Fehler zu kompensieren, können die den verschiedenen Phasenkennlinien entsprechenden mehreren Resonanzfrequenzen zur Bestimmung der parasitären Phasenverschiebung verwendet werden. Diese Bestimmung der parasitären Phasenverschiebung kann individuell für jede Abstandsmessung erfolgen, oder das Ergebnis kann mit früheren Ergebnissen verglichen werden. Um hier eine möglichst hohe Genauigkeit zu erzielen, sollte während der Messung der verschiedenen Resonanzfrequenzen der Abstand des Objekts möglichst unverändert bleiben oder eine eventuelle bekannte Abstandsänderung mit berücksichtigt werden.

Für die erläuterte Bestimmung der parasitären Phasenverschiebung können zumindest die verschiedenen Phasenkennlinien, die entsprechend ermittelten Resonanzfrequenzen und eine geeignete Resonanzbedingung berücksichtigt werden.

Für die Durchführung der erläuterten Eindeutigkeitsprüfung und/oder für die erläuterte Bestimmung der parasitären Phasenverschiebung kann innerhalb der Vorrichtung eine Auswerteeinrichtung vorgesehen sein.

Die verschiedenen Phasenkennlinien können sich hinsichtlich ihrer jeweiligen Mittenfrequenz und/oder ihrer Steigung im Bereich ihrer unterschiedlichen oder gleichen Mittenfrequenz unterscheiden. Es ist jedoch bevorzugt, wenn die den verschiedenen Phasenkennlinien entsprechenden, jeweils durch die 3dB-Grenzfrequenzen begrenzten Transmissionsbereiche sich überschneiden.

Außerdem ist es bevorzugt, wenn in dem für die Abstandsbestimmung interessierenden Resonanzfrequenzbereich, insbesondere bei der Mittenfrequenz, die durch die Phasenkennlinie des Filterbausteins verursachte Phasenverschiebung über die parasitäre Phasenverschiebung dominiert. Insbesondere kann die durch den Filterbaustein bewirkte Phasenverschiebung mindestens eineinhalbfach oder doppelt so groß sein wie die parasitäre Phasenverschiebung.

Ferner ist es von Vorteil, wenn wenigstens eine für die Bestimmung des Abstands herangezogene Phasenkennlinie derartig gewählt wird, daß die entsprechende Resonanzfrequenz in einem Frequenzbereich liegt, innerhalb dessen die Resonanzfrequenz mit besonders hoher Meßgenauigkeit ermittelt werden kann. Die weiteren Resonanzfrequenzen können so gewählt werden, daß die weiteren Auswertungen, beispielsweise Eindeutigkeitsprüfung oder Bestimmung der parasitären Phasenverschiebung, besonders einfach oder mit besonders hoher Genauigkeit erfolgen können.

Wie erläutert, ist es von Vorteil, wenn die verschiedenen Resonanzfrequenzen für jeweils denselben Abstand des Objekts bestimmt werden. Zu diesem Zweck ist es bevorzugt, wenn die Resonanzfrequenzen des Schwingkreises gleichzeitig oder zumindest in kurzem zeitlichen Abstand zueinander ermittelt werden.

Der bauliche Aufwand zur Realisierung der Erfindung kann vorteilhaft dadurch verringert werden, daß ein einziger Filterbaustein vorgesehen ist, bei dem die verschiedenen Phasenkennlinien ausgewählt werden können. Alternativ hierzu kann für jede Phasenkennlinie ein eigener Filterbaustein vorgesehen sein.

Weiterhin ist es von Vorteil, wenn zur Bildung der verschiedenen Schwingkreise mit den unterschiedlichen Resonanzfrequenzen mehrere Bauelemente gemeinsam verwendet werden. Hierfür kommen, neben dem bereits genannten Filterbaustein, insbesondere der Sender und der Empfänger in Frage. Auf diese Weise können die Schwingkreise also teilweise parallel ausgelegt sein. Der jeweils individuell vorgesehene Teil der Schwingkreise kann von dem parallelen Teil durch ein Summenglied bzw. einen Entkoppler getrennt sein.

Gemäß einer Weiterbildung ist der Filterbaustein als ein digitaler Baustein ausgebildet. Dadurch ist die Phasenkennlinie dieses Filterbausteins besonders genau und reproduzierbar definiert. Außerdem sind unerwünschte Temperatur- und Alterungseffekte weitestgehend ausgeschlossen. Ferner können bei einer derartigen digitalen Ausgestaltung auf besonders einfache und platzsparende Weise mehrere verschiedene Phasenkennlinien realisiert werden, so daß ein teilparalleler Aufbau mehrerer Schwingkreise begünstigt wird.

Es ist bevorzugt, wenn mehrere, insbesondere alle Bauelemente der Vorrichtung, die einen Teil des Schwingkreises bilden und eine Phasenverschiebung verursachen, innerhalb des digitalen Bausteins realisiert sind. Insbesondere kommen für diese zusätzliche Integration ein Bandpaß und/oder eine Phasenkorrekturschaltung in Frage.

Weiterhin kann dieser digitale Baustein durch ein FPGA (field programmable gate array) oder ein GA (gate array) gebildet sein.

Die Erfindung findet hinsichtlich aller Lösungsansätze und Ausführungsformen besonderes vorteilhafte Verwendung für die Bestimmung des Objektabstands zum Zwecke einer automatischen Fokussierung der Sende- und/oder Empfangsoptik eines Barcodelesers, da bei einem Barcodeleser mit Autofokusfunktion die Genauigkeit der Abstandsbestimmung besonders wichtig ist.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:

Fig. 1 ein Blockschaltbild einer erfindungsgemäßen Vorrichtung, die Teil eines Codelesers ist,

Fig. 2 ein Frequenz-Phasen-Diagramm, und

Fig. 3a und 3b      Abstands-Frequenz-Diagramme.

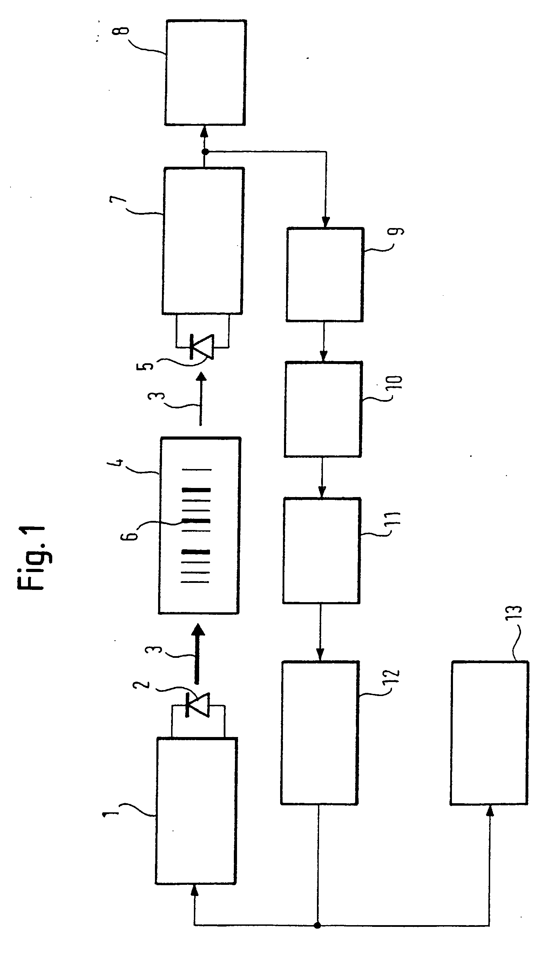

Die in Fig. 1 dargestellte Vorrichtung weist einen von einer Steuerschaltung 1 beaufschlagten Sender 2, insbesondere eine Laserdiode auf, welcher einen modulierten Lichtstrahl über eine Meßstrecke 3 aussendet. Dieser Lichtstrahl wird von einem am Ende der Meßstrecke 3 angeordneten Objekt 4 reflektiert und gelangt auf diese Weise über die Meßstrecke 3 zu einem Empfänger 5, insbesondere einem Lichtempfänger. Das Objekt 4 ist mit einem Code 6 versehen, welcher von dem Lichtstrahl abgetastet wird.

Das vom Empfänger 5 erzeugte Signal wird einer Empfangsschaltung 7 zugeführt, deren Ausgangssignal zum einen eine Schaltung 8 zur Ermittlung des abzutastenden Codes 6 und andererseits eine aus mehreren Bauelementen bestehende Schaltung zur Bestimmung des Abstands zwischen Sender 2 bzw. Empfänger 5 und Objekt 4 beaufschlagt. Eine entsprechende Signalaufteilung kann beispielsweise durch Einsatz zusätzlicher Filter erfolgen.

Ein Bandpaß 9 zur Extraktion des für die Abstandsbestimmung geeigneten Signals ist mit dem Ausgangssignal der Empfangsschaltung 7 beaufschlagt. Das von diesem Bandpaß 9 gelieferte Signal wird einer Phasenkorrekturschaltung 10 zugeführt, die so ausgelegt ist, daß sie den phasenverschiebenden Einfluß der einzelnen Bauelemente der Gesamtschaltung zumindest teilweise kompensiert, so daß das am Ausgang der Phasenkorrekturschaltung 10 anliegende Signal gegenüber dem vom Sender 2 ausgesandten Signal letztlich im wesentlichen nur noch die durch die Lichtlaufzeit über die Meßstrecke 3 bedingte Phasenverschiebung aufweist.

Der Ausgang der Phasenkorrekturschaltung 10 ist mit einem Verstärker 11 verbunden, dessen Ausgangssignal einen Filterbaustein 12 beaufschlagt. Das Ausgangssignal des Filterbausteins 12 wird zum einen der Steuerschaltung 1 zur Ansteuerung des Senders 2 und zum anderen einer Auswerteschaltung 13 zugeführt.

Der Sender 2, die Meßstrecke 3, der Empfänger 5, die Empfangsschaltung 7, der Bandpaß 9, die Phasenkorrekturschaltung 10, der Verstärker 11, der Filterbaustein 12 und die Steuerschaltung 1 bilden ein geschlossenes, rückgekoppeltes System, also einen Schwingkreis, bei dem unterschiedliche Lichtlaufzeiten über die Meßstrecke 3 zu einer Phasenänderung des vom Empfänger 5 gelieferten Signals führen, welche im Schwingkreis in eine Frequenzänderung umgesetzt wird.

Die jeweils resultierende Resonanzfrequenz dieses Schwingkreis kann durch die Auswerteschaltung 13 unmittelbar gemessen werden, um hieraus den Abstand des Objekts 4 zu bestimmen. Diese Abstandsinformation kann beispielsweise zur automatischen Fokussierung einer Empfangsoptik auf den Code 6 verwendet werden.

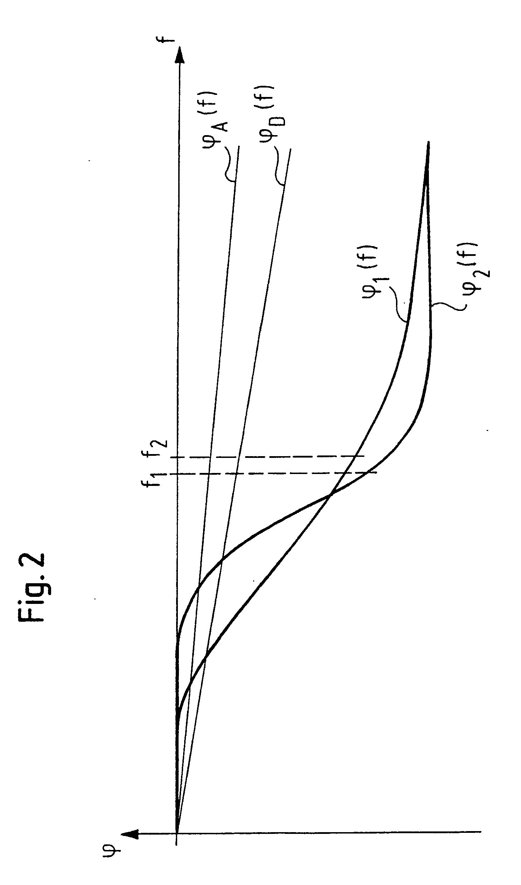

Gemäß der Erfindung kommen innerhalb des Filterbausteins 12 wenigstens zwei verschiedene Phasenkennlinien zum Einsatz. Dies führt dazu, daß der erläuterte Schwingkreis mit unterschiedlichen Resonanzfrequenzen schwingt. Die hierdurch eröffnete Verbesserung der Meßgenauigkeit wird nachfolgend anhand von Fig. 2 erläutert.

Fig. 2 zeigt ein Diagramm, in dem die Phase $\varphi$ über der Frequenz f angetragen ist. Darin eingezeichnet sind zwei verschiedene, in dem Filterbaustein 12 implementierte Phasenkennlinien $\varphi_1$ und $\varphi_2$.

Indem diese beiden unterschiedlichen Phasenkennlinien $\varphi_1$ und $\varphi_2$ dem ansonsten gleichen Schwingkreis gemäß Fig. 1, d.h. insbesondere auch dem gleichen Abstand des Objekts 4 entlang der Meßstrecke 3 zugrundegelegt werden, stellen sich unterschiedliche Resonanzfrequenzen ein. Beispielhaft sind in Fig. 2 die Resonanzfrequenzen $f_1$ und $f_2$ eingezeichnet. Aus jeder dieser beiden Resonanzfrequenzen $f_1$ und $f_2$ kann - aufgrund der Kenntnis der entsprechenden Phasenkennlinie $\varphi_1$ bzw. $\varphi_2$ - der Abstand zwischen der Meßvorrichtung und dem Objekt 4 berechnet werden.

Darüber hinaus können die beiden Resonanzfrequenzen $f_1$ und $f_2$, bzw. die entsprechenden Abstände, für eine Eindeutigkeitsprüfung herangezogen werden, also für eine Überprüfung, welches ganzzahlige Vielfache von $2\pi$ bzw. 360° der jeweils gemessenen Frequenz $f_1$ und $f_2$ als Resonanzbedingung zugrundeliegt.

Für diese Überprüfung werden beispielsweise die den gemessenen Resonanzfrequenzen $f_1$, $f_2$ entsprechenden Abstände bestimmt, wobei gegebenenfalls jeweils mehrere unterschiedliche Resonanzbedingungen, also unterschiedliche ganzzahlige Vielfache von $2\pi$ bzw. 360° zugrundegelegt werden. Durch Vergleich dieser verschiedenen möglichen Abstände kann ein eindeutiges Ergebnis bestimmt werden.

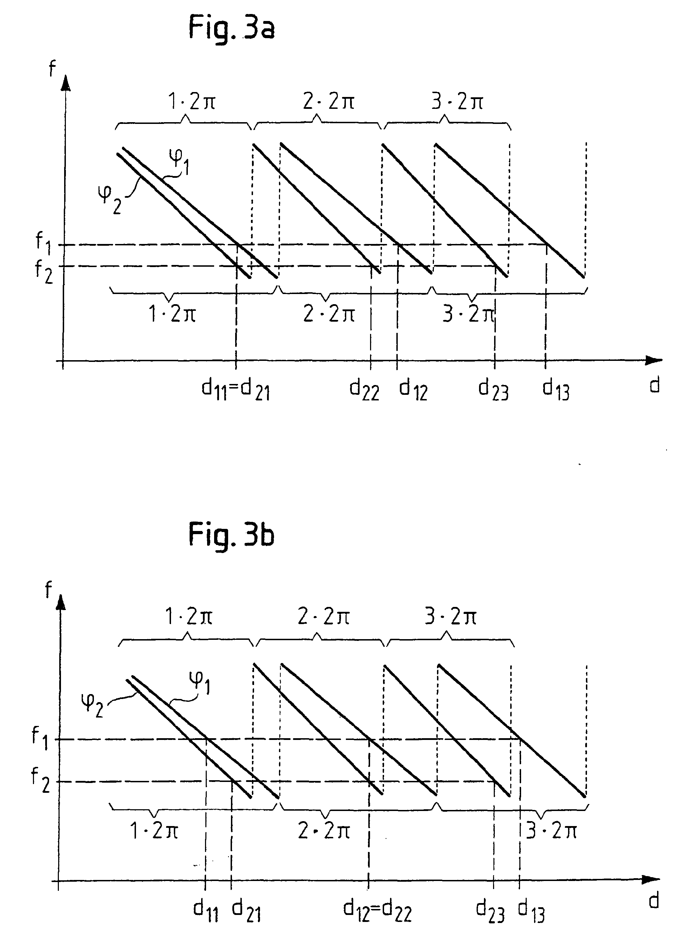

Diese Vorgehensweise ist aus Fig. 3a ersichtlich. Darin ist - jeweils für die Phasenkennlinie $\varphi_1$ und die Phasenkennlinie $\varphi_2$ - der Verlauf der Resonanzfrequenz f in Abhängigkeit von dem Objektabstand d gezeigt, und zwar für unterschiedliche Resonanzbedingungen i * $2\pi$ (i = 1, 2, 3 ...). Aus der gemessenen Resonanzfrequenz $f_1$ ergeben sich entsprechend mögliche unterschiedliche Abstandswerte $d_{11}$, $d_{12}$, $d_{13}$ usw. Entsprechendes gilt für die Resonanzfrequenz $f_2$ (Abstandswerte $d_{21}$, $d_{22}$, $d_{23}$ usw.). Durch Vergleich dieser möglichen Abstandswerte $d_{1i}$, $d_{2i}$ ergibt sich unmittelbar die der Messung zugrunde liegende Resonanzbedingung bzw. der korrekte Objektabstand.

In dem in Fig. 3a gezeigten Beispiel liegt der jeweiligen Messung der beiden Resonanzfrequenzen $f_1$, $f_2$ die Resonanzbedingung 1 * $2\pi$ zugrunde. Fig. 3b zeigt demgegenüber beispielhaft den Fall, daß eine Schwingung mit der Resonanzbedingung 2 * $2\pi$ angeregt und gemessen wird.

Anstelle der erläuterten Berechnung von mehreren möglichen Abständen und des Vergleichs dieser Abstände miteinander kann die Eindeutigkeitsprüfung auf einfache Weise beispielsweise auch durchgeführt werden, indem lediglich der Unterschied der gemessenen Resonanzfrequenzen $f_1$, $f_2$ mit einer Referenztabelle verglichen wird, aus der sich der entsprechende Objektabstand in eindeutiger Weise ergibt. Eine derartige Referenztabelle kann durch vorherige Auswertung der in Fig. 3a bzw. 3b dargestellten Frequenz-Abstands-Abhängigkeit erstellt und herangezogen werden.

Alternativ oder zusätzlich zu der anhand von Fig. 2 erläuterten Eindeutigkeitsprüfung können die Ermittlung der beiden verschiedenen Resonanzfrequenzen $f_1$ und $f_2$ und die Kenntnis der zugrundeliegenden verschiedenen Phasenkennlinien $\varphi_1$ bzw. $\varphi_2$ dazu verwendet werden, die parasitäre Phasenverschiebung, die durch andere Bauelemente 9, 10, 11 als den Filterbaustein 12 verursacht wird, individuell für jede Abstandsmessung zu bestimmen. Das Phasenverhalten und die Phasenfehler der Bauelemente des Schwingkreises können nämlich nicht immer mit der gewünschten Genauigkeit bestimmt oder vorhergesagt werden.

Zu diesem Zweck kann für die parasitäre Phasenverschiebung ein konstanter Wert oder eine beispielsweise lineare Frequenzabhängigkeit angesetzt werden. Durch den letztgenannten Ansatz wird der häufige Fall einer von den Bauelementen 9, 10, 11 verursachten konstanten Zeitverzögerung (Delay) besonders treffend wiedergegeben. Auch für die durch den Signalverlauf entlang der Meßstrecke 3 verursachte Phasenverschiebung kann eine lineare Frequenzabhängigkeit angesetzt werden.

Beispielsweise wird die Resonanzbedingung, also die einer Wellenlänge entsprechende Phasenverschiebung $2\pi$ bzw. 360° oder ein ganzzahliges Vielfaches hiervon, jeweils für die beiden Resonanzfrequenzen $f_1$ und $f_2$ gemäß der folgenden Formel gleichgesetzt mit der Summe der parasitären Phasenverschiebung, der über die Meßstrecke 3 verursachten Phasenverschiebung und der durch den Filterbaustein 12 bewirkten Phasenverschiebung:

$$\varphi_{1,gesamt}(f_1) = \varphi_A(f_1) + \varphi_D(f_1) + \varphi_1(f_1)$$

$$\varphi_{2,gesamt}(f_2) = \varphi_A(f_2) + \varphi_D(f_2) + \varphi_2(f_2)$$

Dabei entsprechen ($\varphi_{1,geumt}$ und $\varphi_{2,gesamt}$ der bekannten Resonanzbedingung.

$\varphi_A$ entspricht der - möglicherweise temperaturabhängigen - parasitären Phasenverschiebung, für die eine lineare Frequenzabhängigkeit vorausgesetzt wird: $\varphi_A(f) = m * f$. Diese Näherung ist in Fig. 2 durch eine Gerade mit der Steigerung m dargestellt.

Der weitere Summand $\varphi_D$ repräsentiert die aufgrund des Signalverlaufs entlang der Meßstrecke 3 verursachte Phasenverschiebung. Hierfür gilt: $\varphi_D(f) = d * f$, wobei die Steigung d von der Entfernung des Tastobjekts abhängt. Eine entsprechende Gerade ist ebenfalls in Fig. 2 eingezeichnet.

Der dritte Summand $\varphi_1$ bzw. $\varphi_2$ entspricht der bekannten, durch den Filterbaustein 12 verursachten Phasenverschiebung.

Somit bilden die zwei genannten Gleichungen ein Gleichungssystem mit den zwei unbekanntenVariablen m und d. Durch Messung der beiden Resonanzfrequenzen $f_1$ und $f_2$ für die unterschiedlichen Phasenkennlinien $\varphi_1$ und $\varphi_2$ kann also nicht nur die Variable d (und somit der Abstand des Objekts 4) ermittelt werden, sondern auch - und zwar für jede einzelne Abstandsmessung - die Variable m bzw. die parasitäre Phasenverschiebung.

Prinzipiell kann durch die Verwendung einer entsprechenden Anzahl n von Phasenkennlinien $\varphi_i$ ein für die geforderte Meßgenauigkeit notwendiges Gleichungssystem n-ter Ordnung gelöst werden.

Falls die Messungen der verschiedenen Resonanzfrequenzen gleichzeitig oder zeitlich kurz hintereinander erfolgen, kann - wie hier geschehen - davon ausgegangen werden, daß sich der Abstand zu dem Objekt 4 zwischenzeitlich nicht ändert.

Wie aus Fig. 2 ersichtlich, sind bei dem erläuterten Beispiel die beiden Phasenkennlinien $\varphi_1$ und $\varphi_2$ derartig gewählt, daß die entsprechenden Resonanzfrequenzen $f_1$ und $f_2$ eng benachbart zueinander liegen. Insbesondere unterscheiden sich die Resonanzfrequenzen $f_1$ und $f_2$ um weniger als die Bandbreite (3dB-Grenzfrequenzen) eines der die Phasenkennlinien $\varphi_1$ und $\varphi_2$ jeweils aufweisenden Filter. Aufgrund der gezeigten Ähnlichkeit der Resonanzfrequenzen $f_1$ und $f_2$ ist der erläuterte lineare Ansatz für die Frequenzabhängigkeit der parasitären Phasenverschiebung $\varphi_A$ eine ausreichend gute Näherung. Eine derartige Wahl der Phasenkennlinien $\varphi_1$ und $\varphi_2$ ist jedoch nicht notwendig, insbesondere nicht für die Eindeutigkeitsprüfung.

Ferner ist aus Fig. 2 ersichtlich, daß die durch die Phasenkennlinien $\varphi_1$ und $\varphi_2$ verursachte Phasenverschiebung jeweils über die parasitäre Phasenverschiebung dominiert, so daß durch den Verlauf der Phasenkennlinien $\varphi_1$ und $\varphi_2$ das Resonanzverhalten des Schwingkreis und die Ortsauflösung der Abstandsbestimmung besonders einfach und wirkungsvoll beeinflußt werden können.

Gemäß eines optionalen Weiterbildung ist der Filterbaustein 12 als digitaler Baustein ausgebildet, so daß der Verlauf der Phasenkennlinien $\varphi_1$, $\varphi_2$ mit hoher Genauigkeit bekannt ist und im wesentlichen keinen unerwünschten Temperatur- oder Alterungseffekten unterliegt.

Abweichend von Fig. 1 können in diesen digitalen Baustein zusätzlich der Bandpaß 9, die Phasenkorrekturschaltung 10 und/oder die Schaltung 8 zur Codeermittlung integriert sein.

**Bezugszeichenliste**

| | |
|---|---|
| 1 | Steuerschaltung |
| 2 | Sender |
| 3 | Meßstrecke |
| 4 | Objekt |
| 5 | Empfänger |
| 6 | Code |
| 7 | Empfangsschaltung |
| 8 | Schaltung zur Codeermittlung |
| 9 | Bandpaß |
| 10 | Phasenkorrekturschaltung |
| 11 | Verstärker |
| 12 | Filterbaustein |
| 13 | Auswerteschaltung |
| $\varphi$ | Phase |
| $\varphi_1$, $\varphi_2$ | Phasenkennlinie |
| $\varphi_A$ | parasitäre Phasenverschiebung |
| $\varphi_D$ | Phasenverschiebung entlang der Meßstrecke |
| $\varphi_{1,gesamt}$ $\varphi_{2,gesamt}$ | Phasenverschiebung bei Resonanz |
| f | Frequenz, |
| $f_1$, $f_2$ | Resonanzfrequenz |
| d, $d_{1i}$, $d_{2i}$ | Objektabstand |

**Patentansprüche**

1. Verfahren zur Bestimmung des Abstands zwischen einer Vorrichtung, die zumindest einen Sender (2), einen Empfänger (5) und einen Filterbaustein (12) mit definierter Phasenkennlinie ($\varphi_1$, $\varphi_2$) aufweist, und einem Objekt (4), bei dem

   - vom Sender (2) ein moduliertes Signal, insbesondere ein Lichtsignal in Richtung des Objekts (4) ausgesandt wird,
   - das vom Objekt (4) reflektierte Signal vom Empfänger (5) empfangen wird, und

- das Ausgangssignal des Empfängers (5) zumindest über den Filterbaustein (12) dem Sender (2) zugeführt wird,
- wobei wenigstens der Sender (2), der Empfänger (5) und der Filterbaustein (12) einen Schwingkreis bilden,
- die Resonanzfrequenz ($f_1$, $f_2$) des Schwingkreises gemessen wird und
- der Abstand aus der Resonanzfrequenz ($f_1$, $f_2$) bestimmt wird,

**dadurch gekennzeichnet,**
**daß** für wenigstens zwei verschiedene Phasenkennlinien ($\varphi_1$, $\varphi_2$) die jeweilige Resonanzfrequenz ($f_1$, $f_2$) des Schwingkreises ermittelt wird.

2. Verfahren nach Anspruch 1,
**dadurch gekennzeichnet,**
**daß** wenigstens eine, vorzugsweise mehrere oder alle der für die verschiedenen Phasenkennlinien ($\varphi_1$, $\varphi_2$) ermittelten Resonanzfrequenzen ($f_1$, $f_2$) zur Bestimmung der parasitären Phasenverschiebung ($\varphi_A$) herangezogen wird, die durch andere Bauelemente (9, 10, 11) der Vorrichtung als durch den Filterbaustein (12) verursacht wird.

3. Verfahren nach Anspruch 2,
**dadurch gekennzeichnet,**
**daß** zur Bestimmung des Abstands und der parasitären Phasenverschiebung ($\varphi_A$) die verschiedenen Phasenkennlinien ($\varphi_1$, $\varphi_2$), die entsprechenden ermittelten Resonanzfrequenzen ($f_1$, $f_2$) und eine Resonanzbedingung ($\varphi_{1,gesamt}$, $\varphi_{2,gesamt}$) berücksichtigt werden, und/oder daß die einer Wellenlänge entsprechende Phasenverschiebung ($\varphi_{1,gesamt}$, $\varphi_{2,gesamt}$) gleichgesetzt wird mit der Summe der über die Meßstrecke erzielten Phasenverschiebung ($\varphi_D$), der durch den Filterbaustein bewirkten Phasenverschiebung ($\varphi_1$, $\varphi_2$) und der parasitären Phasenverschiebung ($\varphi_A$), und/oder
**daß** für die parasitäre Phasenverschiebung ($\varphi_A$) eine lineare Frequenzabhängigkeit angesetzt wird.

4. Verfahren nach einem der vorhergehenden Ansprüche,
**dadurch gekennzeichnet,**
**daß** wenigstens eine, vorzugsweise mehrere oder alle der für die verschiedenen Phasenkennlinien ($\varphi_1$, $\varphi_2$) ermittelten Resonanzfrequenzen ($f_1$, $f_2$) bei der Bestimmung des Abstands berücksichtigt werden, und/oder
**daß** zur Bestimmung des Abstands die für die verschiedenen Phasenkennlinien ($\varphi_1$, $\varphi_2$) ermittelten Resonanzfrequenzen ($f_1$, $f_2$) oder die diesen Resonanzfrequenzen ($f_1$, $f_2$) entsprechenden Abstände in Beziehung zueinander gesetzt werden.

5. Verfahren nach einem der vorhergehenden Ansprüche,
**dadurch gekennzeichnet,**
**daß** wenigstens eine, vorzugsweise mehrere oder alle der für die verschiedenen Phasenkennlinien ($\varphi_1$, $\varphi_2$) ermittelten Resonanzfrequenzen ($f_1$, $f_2$) für eine Eindeutigkeitsprüfung herangezogen wird.

6. Verfahren nach Anspruch 5,
**dadurch gekennzeichnet,**
**daß** für die Eindeutigkeitsprüfung die für die verschiedenen Phasenkennlinien ($\varphi_1$, $\varphi_2$) ermittelten Resonanzfrequenzen ($f_1$, $f_2$) miteinander oder mit wenigstens einem Referenzwert verglichen werden, und/oder
**daß** für die Eindeutigkeitsprüfung aus den ermittelten verschiedenen Resonanzfrequenzen ($f_1$, $f_2$) mehrere, insbesondere unterschiedlichen Resonanzbedingungen entsprechende Abstände bestimmt und miteinander verglichen werden.

7. Verfahren nach einem der vorhergehenden Ansprüche,
**dadurch gekennzeichnet, daß** für die verschiedenen Phasenkennlinien ($\varphi_1$, $\varphi_2$) des Filterbausteins (12) die Resonanzfrequenzen ($f_1$, $f_2$) des Schwingkreises gleichzeitig oder in kurzem zeitlichen Abstand nacheinander ermittelt werden, und/oder
**daß** der ermittelte Abstand für eine automatische Fokussierung eines Barcodelesers verwendet wird.

8. Vorrichtung zur Bestimmung des Abstands zu einem Objekt (4), wenigstens mit

- einem Sender (2) zum Aussenden eines modulierten Signals, insbesondere eines Lichtsignals in Richtung des Objekts (4),
- einem Empfänger (5) zum Empfangen des vom Objekt (4) reflektierten Signals,
- einem Filterbaustein (12) mit definierter Phasenkennlinie ($\varphi_1$, $\varphi_2$), über den zur Bildung eines Schwingkreises das Ausgangssignal des Empfängers (5) dem Sender (2) zuführbar ist, und
- einer Auswerteeinrichtung (13), durch die die Resonanzfrequenz ($f_1$, $f_2$) des Schwingkreises meßbar ist,

**dadurch gekennzeichnet,**
**daß** zur Anregung und Ermittlung unterschiedlicher Resonanzfrequenzen ($f_1$, $f_2$) wenigstens zwei verschiedene Phasenkennlinien ($\varphi_1$, $\varphi_2$) vorgesehen sind.

9. Vorrichtung nach Anspruch 8,
**dadurch gekennzeichnet,**
**daß** die parasitäre Phasenverschiebung ($\varphi_A$), die durch andere Bauelemente (9, 10, 11) der Vorrichtung als durch den Filterbaustein (12) verursacht wird, von der Auswerteeinrichtung (13) aus den für die verschiedenen Phasenkennlinien ($\varphi_1$, $\varphi_2$) ermittelten Resonanzfrequenzen ($f_1$, $f_2$) bestimmbar ist, und/oder
**daß** durch die Auswerteeinrichtung (13) der Abstand aus wenigstens einer, vorzugsweise mehreren oder allen der den verschiedenen Phasenkennlinien ($\varphi_1$, $\varphi_2$) entsprechenden Resonanzfrequenzen ($f_1$, $f_2$) bestimmbar ist, und/oder
**daß** zur Bestimmung des Abstands die für die verschiedenen Phasenkennlinien ($\varphi_1$, $\varphi_2$) ermittelten Resonanzfrequenzen ($f_1$, $f_2$) oder die diesen Resonanzfrequenzen ($f_1$, $f_2$) entsprechenden Abstände von der Auswerteeinrichtung (13) in Beziehung zueinander setzbar sind.

10. Vorrichtung nach einem der Ansprüche 8 und 9,
**dadurch gekennzeichnet, daß** für eine Eindeutigkeitsprüfung die für die verschiedenen Phasenkennlinien ($\varphi_1$, $\varphi_2$) ermittelten Resonanzfrequenzen ($f_1$, $f_2$) von der Auswerteeinrichtung (13) miteinander oder mit wenigstens einem Referenzwert vergleichbar sind, und/oder
**daß** für eine Eindeutigkeitsprüfung aus den ermittelten verschiedenen Resonanzfrequenzen ($f_1$, $f_2$) mehrere, insbesondere unterschiedlichen Resonanzbedingungen entsprechende Abstände von der Auswerteeinrichtung (13) bestimmbar und miteinander vergleichbar sind.

11. Vorrichtung nach einem der Ansprüche 8 bis 10,
**dadurch gekennzeichnet,**
**daß** ein einziger Filterbaustein (12) mit den verschiedenen Phasenkennlinien ($\varphi_1$, $\varphi_2$) vorgesehen ist und/oder
**daß** zur Bildung der Schwingkreise mit den unterschiedlichen Resonanzfrequenzen ($f_1$, $f_2$) als gemeinsam verwendete Bauelemente zumindest der Sender (2) und der Empfänger (5) vorgesehen sind, und/oder
**daß** die Vorrichtung als Barcodeleser mit einer Fokussiereinrichtung zur automatischen Fokussierung einer Sende- und/oder Empfangsoptik ausgebildet ist, wobei die Fokussierung in Abhängigkeit von dem ermittelten Abstand steuerbar ist.

12. Verfahren bzw. Vorrichtung nach einem der vorhergehenden Ansprüche,
**dadurch gekennzeichnet,**
**daß** die verschiedenen Phasenkennlinien ($\varphi_1$, $\varphi_2$) sich hinsichtlich ihrer Mittenfrequenz und/oder ihrer Steigung im Bereich ihrer jeweiligen Mittenfrequenz unterscheiden, und/oder
**daß** die verschiedenen Phasenkennlinien ($\varphi_1$, $\varphi_2$) einen gemeinsamen Transmissionsbereich (B) aufweisen, und/oder
**daß** wenigstens eine, vorzugsweise jede der verschiedenen Phasenkennlinien ($\varphi_1$, $\varphi_2$) so gewählt wird bzw. ist, daß die bei der Mittenfrequenz durch den Filterbaustein (12) verursachte Phasenverschiebung größer ist als die parasitäre Phasenverschiebung, insbesondere mindestens 1,5-fach, vorzugsweise mindestens doppelt so groß.

13. Verfahren bzw. Vorrichtung nach einem der vorhergehenden Ansprüche,
**dadurch gekennzeichnet,**
**daß** die verschiedenen Phasenkennlinien ($\varphi_1$, $\varphi_2$) derartig gewählt werden bzw. sind, daß die entsprechenden Resonanzfrequenzen ($f_1$, $f_2$) des Schwingkreises zueinander benachbart liegen, wobei die Resonanzfrequenzen ($f_1$, $f_2$) sich insbesondere um weniger als die Bandbreite, die einer der Phasenkennlinien ($\varphi_1$, $\varphi_2$) entspricht, unterscheiden, und/oder
**daß** wenigstens eine für die Bestimmung des Abstands herangezogene Phasenkennlinie ($\varphi_1$, $\varphi_2$) derartig gewählt wird bzw. ist, daß die entsprechende Resonanzfrequenz ($f_1$, $f_2$) in einem Bereich hoher Meßgenauigkeit liegt.

14. Verfahren bzw. Vorrichtung nach einem des vorhergehenden Ansprüche,
**dadurch gekennzeichnet,**
**daß** der Filterbaustein (12) als ein digitaler Baustein ausgebildet ist.

**15.** Verfahren bzw. Vorrichtung nach Anspruch 14,
**dadurch gekennzeichnet,**
**daß** wenigstens ein weiteres Bauelement, das einen Teil des Schwingkreises bildet, vorzugsweise alle einen Phasengang aufweisenden Bauelemente (8, 9, 10), in dem digitalen Baustein (12) realisiert ist bzw. sind, wobei insbesondere ein Bandpaß (9) und/oder eine Phasenkorrekturschaltung (10) in dem digitalen Baustein realisiert ist, und/oder
**daß** der digitale Baustein (12) durch ein FPGA oder ein GA gebildet ist.

**Claims**

**1.** A method of determining the distance between an apparatus which has at least one transmitter (2), one receiver (5) and one filter module (12) having a defined phase curve ($\varphi_1$, $\varphi_2$), and an object (4), wherein

- a modulated signal, in particular a light signal, is transmitted in the direction of the object (4) by the transmitter (2);
- the signal reflected by the object (4) is received by the receiver (5); and
- the output signal of the receiver (5) is delivered to the transmitter (2) at least via the filter module (12);
- wherein at least the transmitter (2), the receiver (5) and the filter module (12) form a resonant circuit,
- the frequency of resonance ($f_1$, $f_2$) of the resonant circuit is measured, and
- the distance is determined from the frequency of resonance ($f_1$, $f_2$),

**characterized in that**
the respective frequency of resonance ($f_1$, $f_2$) of the resonant circuit is determined for at least two different phase curves ($\varphi_1$, $\varphi_2$).

**2.** A method in accordance with claim 1, **characterized in that** at least one, preferably a plurality or all, of the frequencies of resonance ($f_1$, $f_2$) determined for the different phase curves ($\varphi_1$, $\varphi_2$) are used to determine the parasitic phase shift ($\varphi_A$) which is caused by components (9, 10, 11) of the apparatus other than the filter module (12).

**3.** A method in accordance with claim 2, **characterized in that** the different phase curves ($\varphi_1$, $\varphi_2$), the corresponding determined frequencies of resonance ($f_1$, $f_2$) and a resonant condition ($\varphi_{1,total}$, $\varphi_{2,total}$) are taken into account to determine the distance and the parasitic phase shift ($\varphi_A$); and/or **in that** the phase shift ($\varphi_{1,total}$, $\varphi_{2,total}$) corresponding to a wavelength is equated with the sum of the phase shift ($\varphi_D$) achieved over the measured length, of the phase shift ($\varphi_1$, $\varphi_2$) effected by the filter module and of the parasitic phase shift ($\varphi_A$); and/or **in that** a linear frequency dependence is set for the parasitic phase shift ($\varphi_A$).

**4.** A method in accordance with any one of the preceding claims, **characterized in that** at least one, preferably a plurality or all, of the frequencies of resonance ($f_1$, $f_2$) determined for the different phase curves ($\varphi_1$, $\varphi_2$) are taken into account in the determination of the distance; and/or **in that** the frequencies of resonance ($f_1$, $f_2$) determined for the different phase curves ($\varphi_1$, $\varphi_2$), or the distances corresponding to these frequencies of resonance ($f_1$, $f_2$) are put in relation to one another for the determination of the distance.

**5.** A method in accordance with any one of the preceding claims, **characterized in that** at least one, preferably a plurality or all, of the resonance frequencies ($f_1$, $f_2$) determined for the different phase curves ($\varphi_1$, $\varphi_2$) are used for a non-ambiguity check.

**6.** A method in accordance with claim 5, **characterized**
**in that** the frequencies of resonance ($f_1$, $f_2$) determined for the different phase curves ($\varphi_1$, $\varphi_2$) are compared with one another or with at least one reference value for the non-ambiguity check; and/or
**in that** a plurality of distances, corresponding in particular to different resonant conditions, are determined from the different frequencies of resonance ($f_1$, $f_2$) that are determined and compared with one another for the non-ambiguity check.

**7.** A method in accordance with any one of the preceding claims, **characterized in that** the frequencies of resonance ($f_1$, $f_2$) of the resonant circuit are determined simultaneously or successively at short time intervals for the different phase curves ($\varphi_1$, $\varphi_2$) of the filter module (12); and/or **in that** the distance determined is used for an automatic focusing of a barcode reader.

8. An apparatus for determining the distance to an object (4) comprising at least

   - a transmitter (2) for transmitting a modulated signal, in particular a light signal, in the direction of the object (4);
   - a receiver (5) for receiving the signal reflected by the object (4);
   - a filter module (12) having a defined phase curve ($\varphi_1$, $\varphi_2$) via which the output signal of the receiver (5) can be delivered to the transmitter (2) to form a resonant circuit; and
   - an evaluation device (13) by which the frequency of resonance ($f_1$, $f_2$) of the resonant circuit can be measured,

   **characterized in that** at least two different phase curves ($\varphi_1$, $\varphi_2$) are provided to stimulate and to determine different frequencies of resonance ($f_1$, $f_2$).

9. An apparatus in accordance with claim 8, **characterized in that** the parasitic phase shift ($\varphi_A$), which is caused by components (9, 10, 11) of the apparatus other than the filter module (12), can be determined by the evaluation device (13) from the frequencies of resonance ($f_1$, $f_2$) determined for the different phase curves ($\varphi_1$, $\varphi_2$); and/or **in that** the distance can be determined by the evaluation device (13) from at least one, preferably from a plurality or from all, of the frequencies of resonance ($f_1$, $f_2$) corresponding to the different phase curves ($\varphi_1$, $\varphi_2$); and/or **in that** the frequencies of resonance ($f_1$, $f_2$) determined for the different phase curves ($\varphi_1$, $\varphi_2$), or the distances corresponding to these frequencies of resonance ($f_1$, $f_2$), are put into relationship with one another by the evaluation device (13) to determine the distance.

10. An apparatus in accordance with any one of the claims 8 and 9,
    **characterized**
    **in that** the frequencies of resonance ($f_1$, $f_2$) determined for the different phase curves ($\varphi_1$, $\varphi_2$) are comparable with one another or with at least one reference value by the evaluation unit (13) for a non-ambiguity check; and/or
    **in that** a plurality of distances, corresponding in particular to different resonant conditions, can be determined from the different frequencies of resonance ($f_1$, $f_2$) determined and can be compared with one another by the evaluation unit (13) for a non-ambiguity check.

11. An apparatus in accordance with any one of claims 8 to 10, **characterized in that** one single filter module (12) with the different phase curves ($\varphi_1$, $\varphi_2$) is provided and/or **in that** at least the transmitter (2) and the receiver (5) are provided as jointly used components to form the resonant circuits with the different frequencies of resonance ($f_1$, $f_2$); and/or **in that** the apparatus is made as a barcode reader having a focusing device for the automatic focusing of an optical transmission system and/or of an optical reception system, with the focusing being controllable in dependence on the distance determined.

12. A method or an apparatus in accordance with any one of the preceding claims, **characterized**
    **in that** the different phase curves ($\varphi_1$, $\varphi_2$) differ with respect to their center frequency and/or to their gradient in the region of their respective center frequency; and/or
    **in that** the different phase curves ($\varphi_1$, $\varphi_2$) have a common transmission range (B); and/or in that at least one, preferably each, of the different phase curves ($\varphi_1$, $\varphi_2$) is selected such that the phase shift caused by the filter module (12) at the center frequency is larger than the parasitic phase shift, in particular at least 1.5 times larger, preferably twice as large.

13. A method or an apparatus in accordance with any one of the preceding claims, **characterized in that** the different phase curves ($\varphi_1$, $\varphi_2$) are selected such that the corresponding frequencies of resonance ($f_1$, $f_2$) of the resonant circuit lie adjacent to one another, with the frequencies of resonance ($f_1$, $f_2$) differing in particular by less than the bandwidth corresponding to one of the phase curves ($\varphi_1$, $\varphi_2$); and/or **in that** at least one phase curve ($\varphi_1$, $\varphi_2$) used for the determination of the distance is selected such that the corresponding frequency of resonance ($f_1$, $f_2$) lies in a range of high measuring accuracy.

14. A method or an apparatus in accordance with any one of the preceding claims, **characterized in that** the filter module (12) is made as a digital module.

15. A method or an apparatus in accordance with claim 14, **characterized in that** at least one further component, which forms part of the resonant circuit, preferably all components (8, 9, 10) having a phase response, is or are realized in the digital component (12), with in particular a band pass filter (9) and/or a phase correction circuit (10) being realized in the digital component; and/or **in that** the digital component (12) is formed by an FPGA or a GA.

**Revendications**

**1.** Procédé pour déterminer la distance entre un dispositif qui présente au moins un émetteur (2), un récepteur (5) et un composant de filtre (12) avec caractéristique phase-fréquence ($\varphi_1$, $\varphi_2$), et un objet (4), dans lequel

- un signal modulé, en particulier un signal lumineux est émis depuis l'émetteur (2) en direction de l'objet (4),
- le signal réfléchi par l'objet (4) est reçu par le récepteur (5),
- le signal de sortie du récepteur (5) est amené à l'émetteur (2) au moins via le composant de filtre (12),
- au moins l'émetteur, (2), le récepteur (5) et le composant de filtre (12) forment un circuit oscillant,
- la fréquence de résonance ($f_1$, $f_2$) du circuit oscillant est mesurée, et
- la distance est déterminée à partir de la fréquence de résonance ($f_1$, $f_2$),

**caractérisé en ce que**
la fréquence de résonance ($f_1$, $f_2$) respective du circuit oscillant est détectée pour au moins deux caractéristiques phase-fréquence ($\varphi_1$, $\varphi_2$) différentes.

**2.** Procédé selon la revendication 1, **caractérisé en ce qu'**au moins une, de préférence plusieurs ou toutes les fréquences de résonance ($f_1$, $f_2$) détectées pour les différentes caractéristiques phase-fréquence ($\varphi_1$, $\varphi_2$) sont prises en considération pour déterminer le décalage de phase parasitaire ($\varphi_A$) qui est causé par d'autres éléments de construction (9, 10, 11) du dispositif que par le composant de filtre (12).

**3.** Procédé selon la revendication 2, **caractérisé en ce que** pour déterminer la distance et le décalage de phase parasitaire ($\varphi_A$), les différentes caractéristiques phase-fréquence ($\varphi_1$, $\varphi_2$), les fréquences de résonance ($f_1$, $f_2$) correspondantes détectées et une condition de résonance ($\varphi_1$, total, $\varphi_2$ total) sont prises en compte, et/ou **en ce que** le décalage de phase ($\varphi_1$, total, $\varphi_2$ total) correspondant à une longueur d'onde est mis au même niveau que la somme du décalage de phase ($\varphi_D$) atteint sur la distance mesurée, du décalage de phase ($\varphi_1$, $\varphi_2$) provoqué par le composant de filtre et du décalage de phase parasitaire ($\varphi_A$), et/ou **en ce qu'**on fixe une dépendance de fréquence linéaire pour le décalage de phase parasitaire ($\varphi_A$).

**4.** Procédé selon l'une des revendications précédentes, **caractérisé en ce qu'**au moins une, de préférence plusieurs ou toutes les fréquences de résonance ($f_1$, $f_2$) détectées pour les différentes caractéristiques phase-fréquence ($\varphi_1$, $\varphi_2$) sont prises en compte lors de la détermination de la distance, et/ou **en ce que** pour déterminer la distance, les fréquences de résonance ($f_1$, $f_2$) détectées pour les différentes caractéristiques phase-fréquence ($\varphi_1$, $\varphi_2$) ou les distances correspondant à ces fréquences de résonance ($f_1$, $f_2$) sont mises en rapport les unes avec les autres.

**5.** Procédé selon l'une des revendications précédentes, **caractérisé en ce qu'**au moins une, de préférence plusieurs ou toutes les fréquences de résonance ($f_1$, $f_2$) détectées pour les différentes caractéristiques phase-fréquence ($\varphi_1$, $\varphi_2$) sont prises en considération pour un examen d'univocité.

**6.** Procédé selon la revendication 5, **caractérisé en ce que** pour l'examen d'univocité, les fréquences de résonance ($f_1$, $f_2$) détectées pour les différentes caractéristiques phase-fréquence ($\varphi_1$, $\varphi_2$) sont comparées les unes aux autres ou au moins à une valeur de référence, et/ou **en ce que** pour l'examen d'univocité, plusieurs distances correspondant en particulier à des conditions de résonance différentes sont déterminées à partir des différentes fréquences de résonance ($f_1$, $f_2$) détectées et comparées les unes aux autres.

**7.** Procédé selon l'une des revendications précédentes, **caractérisé en ce que** pour les différentes caractéristiques phase-fréquence ($\varphi_1$, $\varphi_2$) du composant de filtre (12), les fréquences de résonance ($f_1$, $f_2$) du circuit oscillant sont détectées simultanément ou successivement à courtes distances dans le temps, et/ou **en ce que** la distance détectée est utilisée pour une focalisation automatique d'un lecteur de code-barres.

**8.** Dispositif pour déterminer la distance par rapport à un objet (4), comportant au moins

- un émetteur (2) pour émettre un signal modulé, en particulier un signal lumineux en direction de l'objet (4),
- un récepteur (5) pour recevoir le signal réfléchi par l'objet (4),
- un composant de filtre (12) avec caractéristique phase-fréquence ($\varphi_1$, $\varphi_2$) définie, via lequel le signal de sortie du récepteur (5) peut être amené à l'émetteur (2) pour former un circuit oscillant, et

- un dispositif d'évaluation (13) au moyen duquel on peut mesurer la fréquence de résonance ($f_1$, $f_2$) du circuit oscillant,

**caractérisé en ce que**

pour exciter et détecter des fréquences de résonance ($f_1$, $f_2$) différentes, il est prévu au moins deux différentes caractéristiques phase-fréquence ($\varphi_1$, $\varphi_2$).

**9.** Dispositif selon la revendication 8, **caractérisé en ce que** le décalage de phase parasitaire ($\varphi_A$) qui est provoqué par d'autres éléments (9, 10, 11) du dispositif que par le composant de filtre (12), peut être déterminé par le dispositif d'évaluation (13) à partir des fréquences de résonance ($f_1$, $f_2$) détectées pour les différentes caractéristiques phase-fréquence ($\varphi_1$, $\varphi_2$), et/ou

**en ce que**, au moyen du dispositif d'évaluation (13), la distance peut être détectée à partir d'au moins une, de préférence plusieurs ou toutes les fréquences de résonance ($f_1$, $f_2$) correspondant aux différentes caractéristiques phase-fréquence ($\varphi_1$, $\varphi_2$), et/ou

**en ce que** pour déterminer la distance, les fréquences de résonance ($f_1$, $f_2$) détectées pour les différentes caractéristiques phase-fréquence ($\varphi_1$, $\varphi_2$) ou les distances correspondant à ces fréquences de résonance ($f_1$, $f_2$) peuvent être mises en rapport les unes avec les autres par le dispositif d'évaluation (13).

**10.** Dispositif selon l'une des revendications 8 et 9, **caractérisé en ce que** pour un examen d'univocité, les fréquences de résonance ($f_1$, $f_2$) détectées pour les différentes caractéristiques phase-fréquence ($\varphi_1$, $\varphi_2$) peuvent être comparées les unes aux autres ou avec au moins une valeur de référence par le dispositif d'évaluation (13), et/ou

**en ce que** pour un examen d'univocité à partir des différentes fréquences de résonance ($f_1$, $f_2$) détectées, plusieurs distances correspondant en particulier à différentes conditions de résonance peuvent être déterminées par le dispositif d'évaluation (13) et comparées les unes aux autres.

**11.** Dispositif selon l'une des revendications 8 à 10, **caractérisé en ce qu'**il est prévu un composant de filtre (12) unique avec les différentes caractéristiques phase-fréquence ($\varphi_1$, $\varphi_2$) et/ou

**en ce que** pour former les circuits oscillants avec les différentes fréquences de résonance ($f_1$, $f_2$), au moins l'émetteur (2) et le récepteur (5) sont prévus en tant qu'éléments de construction utilisés en commun, et/ou

**en ce que** le dispositif est réalisé sous forme de lecteur de code-barres avec un dispositif de focalisation pour focaliser automatiquement un système optique d'émission et/ou de réception, la focalisation pouvant être commandée en fonction de la distance déterminée.

**12.** Procédé ou dispositif selon l'une des revendications précédentes, **caractérisé en ce que** les différentes caractéristiques phase-fréquence ($\varphi_1$, $\varphi_2$) se distinguent du point de vue de leur fréquence centrale et/ou de leur pente dans la plage de leur fréquence centrale respective, et/ou

**en ce que** les différentes caractéristiques phase-fréquence ($\varphi_1$, $\varphi_2$) présentent une plage de transmission (B) commune, et/ou

**en ce qu'**au moins une, de préférence chacune des différentes caractéristiques phase-fréquence ($\varphi_1$, $\varphi_2$) est choisie ou est telle que le décalage de phase provoqué par le composant de filtre (12) lors de la fréquence centrale est supérieur au décalage de phase parasitaire, en particulier au moins 1,5 fois supérieur, de préférence au moins deux fois supérieur.

**13.** Procédé ou dispositif selon l'une des revendications précédentes, **caractérisé en ce que** les différentes caractéristiques phase-fréquence ($\varphi_1$, $\varphi_2$) sont choisies ou sont telles que les fréquences de résonance ($f_1$, $f_2$) correspondantes du circuit oscillant sont situées au voisinage les unes des autres, les fréquences de résonance ($f_1$, $f_2$) se distinguant en particulier de moins de la largeur de bande, qui correspond à l'une des caractéristiques phase-fréquence ($\varphi_1$, $\varphi_2$), et/ou

**en ce qu'**au moins une caractéristique phase-fréquence ($\varphi_1$, $\varphi_2$) prise en considération pour déterminer la distance est choisie ou est telle que la fréquence de résonance ($f_1$, $f_2$) correspondante est située dans une plage de haute précision de mesure.

**14.** Procédé ou dispositif selon l'une des revendications précédentes, **caractérisé en ce que** le composant de filtre (12) est réalisé sous forme de composant numérique.

**15.** Procédé ou dispositif selon la revendication 14, **caractérisé en ce qu'**au moins un autre élément de construction, qui forme une partie du circuit oscillant, de préférence tous les éléments de construction (8, 9, 10) présentant une caractéristique de phase est ou sont réalisé(s) dans le composant (12) numérique, et en particulier un filtre passe-

EP 1 262 906 B1

bande (9) et/ou un circuit de correction de phase (10) est réalisé dans le composant numérique, et/ou **en ce que** le composant (12) numérique est formé par un réseau FPGA ou par un réseau GA.

# Fig. 1

EP 1 262 906 B1

Fig. 2

## Fig. 3a

## Fig. 3b